# EUROPEAN PATENT SPECIFICATION

(11) **EP 2 582 182 B1**
(45) Date of publication and mention of the grant of the patent: **13.04.2016**
(21) Application number: 12164726.7
(22) Date of filing: 19.04.2012
(51) Int. Cl.: H04W 40/24, H04L 12/707, H04L 12/753, H04W 84/18

(54) **Bluetooth scatternet tree formation for wireless sensor networks**
Bluetooth-Scatternet-Baumbildung für drahtlose Sensornetzwerke
Formation d'arbre de réseau éclaté bluetooth pour réseaux de capteurs sans fil

(30) Priority: 14.10.2011 EP 11185316
(43) Date of publication of application: 17.04.2013
(73) Proprietor: IHP GmbH-Innovations for High Performance Microelectronics / Leibniz-Institut für innovative Mikroelektronik, 15236 Frankfurt / Oder (DE)
(72) Inventor: Methfessel, Michael, 15230 Frankfurt (DE); Lange, Stefan, 10317 Berlin (DE); Peter, Steffen, 15234 Frankfurt (DE)
(74) Representative: Eisenführ Speiser

(56) References cited:
- US-A1- 2002 044 549
- US-A1- 2009 322 518
- CUOMO F ET AL: "SHAPER:a self-healing algorithm producing multi-hop bluetooth scattERnets", GLOBECOM'03. 2003 - IEEE GLOBAL TELECOMMUNICATIONS CONFERENCE. CONFERENCE PROCEEDINGS. SAN FRANCISCO, CA, DEC. 1 - 5, 2003; [IEEE GLOBAL TELECOMMUNICATIONS CONFERENCE], NEW YORK, NY : IEEE, US, vol. 1, 1 December 2003 (2003-12-01), pages 236-240, XP010677879, DOI: 10.1109/GLOCOM.2003.1258237 ISBN: 978-0-7803-7974-9

## Description

Wireless sensor networks are being rapidly deployed in industrial, environmental, automotive, and medical environments. Of the underlying wireless technologies, Bluetooth is a strong candidate for a significant set of applications. While Bluetooth is not quite as power efficient as e.g. Zigbee, it has the advantages of low cost, robustness, and data throughput. In industrial applications, the driving force is to avoid the effort and cost of wired networking. In this work, the target was networking for solar power plants, but distributed industrial facilities and robotic systems pose a similar situation. The task is then to efficiently and reliably build up a Bluetooth scatternet with the required performance. This has been an active area of research for ten years, but actual deployments have been few, especially for large systems.

### 1. Bluetooth

Since its introduction in the 1990's, Bluetooth has become a widespread technology for wireless personal area networks. Typical applications replace wired links over short distances, e.g., between a mobile phone and a headset, or a PC and keyboard.

A completely different type of application connects an unlimited number of nodes into a "scatternet". This is built on the basic unit of Bluetooth communication, a "piconet" of maximally eight nodes. A scatternet is a collection of piconets, some nodes being members of two or more piconets, arranged in such a way that any two nodes can communicate via multiple hops over intermediate nodes.

Bluetooth is a short-range wireless system based on frequency hopping, characterized by low cost and robustness. Any Bluetooth connection lies within a piconet, which can consist of up to eight nodes. The piconet is coordinated by one node (the master) whereby data can only be transferred between it and the slaves. A scatternet is a collection of piconets, with "bridge" nodes lying in two piconets. The bridge node can be master in one piconet and slave in the other, or it can be slave in both. For a given link, either node can request a role switch, which may or may not be granted by the peer node.

Every Bluetooth device has a unique 6-byte device address, generally denoted by BD_ADDR. A Bluetooth application desiring to control connection setup, termination, and master/slave roles can be built on the host controller interface (HCl). The interface is event-driven: for example, a "Create Connection" command is issued, leading to "Connection Complete" event, possibly some seconds later.

An important issue is device discovery, handled by the "inquiry" and "inquiry scan" modes. One device is in inquiry, repeatedly sending a special inquiry data packet and waiting for a response, while the second device is in inquiry scan, listening for the inquiry packet and responding. Inquiry typically is done for some seconds or until enough responses have been collected, as controlled by the application. Inquiry scan is done periodically and is invisible to the application once the scan has been configured; default is a scan of 11.25 ms every 2.56 s. The inquiry procedure is hopped over 32 dedicated frequencies, split into two trains of 16. Even in error-free transmission conditions, the time for discovery can be up to 10.24 seconds [2] for the default configuration.

In practice, a central ingredient is to use an "interleaved" inquiry scan. The scan then takes 20.5 ms and discovery is highly probable if the inquiry and the inquiry scan phases on the two devices overlap. By default, the result of discovery is essentially the BD_ADDR of the remote node.

A node in inquiry does not participate in normal data transfer; data packets are queued until the inquiry mode is ended. This can lead to large latencies in multi-hop networks if nodes go into inquiry frequently.

According to the standard, a node may have a maximum of eight active connections (seven as master, one as slave in a second piconet). However, up to 255 connections can be put into a park state. This allows a node to effectively maintain more than eight connections by unparking/parking as needed. This feature can be useful in mesh-based scatternet topologies. As mentioned before, the capabilities of actual Bluetooth devices are restricted relative to the standard.

### 2. Scatternet formation

Theoretically a simple concept, a scatternet is surprisingly difficult to build up. Numerous applications in industry, environmental monitoring, and sensor networks would benefit from a robust algorithm to set up and maintain a scatternet. The task is demanding: a large number of independent nodes must self-organize into a coherent network with 100% reliability, operating within the somewhat quirky features of the Bluetooth system. Specific issues are:
a) Nodes must discover other nodes in the neighborhood using the Bluetooth procedure "inquiry", which is slow and interrupts normal data traffic.
b) The Bluetooth piconet structure must be obeyed (a single master, communication only between master and slaves). Different solutions can be found, none of which are especially straightforward.
c) A self-healing property is required. As communication links are temporarily blocked, nodes fail, or new nodes enter, the network must reconfigure to maintain scatternet integrity.
d) Depending on the application, trade-offs exist between power consumption, latency, network robustness, and throughput.

Large networks of up to several thousand nodes lead to additional requirements:
e) A distributed algorithm is mandatory. It is not feasible to collect information about the nodes centrally and to construct the network based on this knowledge.
f) In general, nodes will not be within radio range of each other. In fact, even if they are, transmit power levels and the communication range must be reduced artificially in order to avoid overloading the available channels.

A final set of requirements arises when commercially available Bluetooth devices are used. These generally have additional restrictions compared to the standard. Considering as an example a commercially available implementation known under BlueCore from Cambridge Silicon Radio (www.csr.com), the following additional requirements apply:
g) The standard allows a Bluetooth device to be a member of any number of piconets (albeit a master in only one). In practice, a device can be a member of at most two piconets, with the exception of a transient state during connection setup with role switch.
h) The standard allows each master to control up to seven slaves. In practice, performance degrades strongly for more than 3 to 4 slaves.

Scatternet formation has been intensely studied. Overall, most algorithms can be classified as mesh-based or treebased, although star and ring topologies have been considered. A mesh allows multiple routes between nodes, while a tree is loop-free with a only single route for each node pair. Advantages of a mesh are that the inherent redundancy handles disrupted links, while a tree must be repaired. Also, load balancing or latency reduction can be done by appropriate routing. On the other hand, a mesh topology requires effort and overhead for routing and inter-piconet scheduling.

For tree-building algorithms, the topic is to find an method for large systems which can be implemented with existing Bluetooth hardware. One issue is decentralization. For example, BTCP (Bluetooth Topology Configuration Protocol), described in T. Salonidis, P. Bhagwat, L. Tassiulas, and R. LaMaire, "Distributed topology construction of bluetooth personal area networks," in IEEE INFOCOM 2001, 2001, is a centralized approach in which a coordinator determines optimal piconets and sends lists of descendants (herein also referred to as slaves and children) to the masters. Indeed, if the coordinator has all required information this leads to an optimal topology. However, this approach is not feasible for large systems due to bad scalability and overhead for collecting/distributing information. An algorithm is required, which runs independently on all nodes in parallel, leading to a self-organized and self-healing network.

A second issue is node-to-node visibility. A simple and effective way to build a tree is known as the TSF algorithm and described in G. Tan, A. Miu, J. Guttag, and H. Balakrishnan, "Forming scatternets from bluetooth personal area networks," Massachusetts Institute of Technology, http://Ics.mit.edu/, Tech. Rep. MIT-LCS-TR-826, 2001. Trees merge via their roots only, with one becoming root of the merged tree. This assumes that all nodes are within communication range of each other. For large systems, this cannot be assumed.

In US 2002/0044549 A1, "Efficient scatternet forming" two logically separated scatternets, a maximum connectivity scatternet and a traffic scatternet, are described. A maximum connectivity scatternet maintains information about all nodes in the scatternet in order to facilitate a quick path establishment when a destination node is searched for. A traffic scatternet is designed to achieve the best possible performance for the data flow between involved nodes.
In US 2009/322518, "Data Collection Protocol for Wireless Sensor Networks", A data collection protocol further includes topology control components to regulate how nodes are distributed among tree structures.
A more realistic tree-building approach is known as SHAPER and described in F. Cuomo, G. Di Bacco, and T. Melodia, "Shaper: a self-healing algorithm producing multi-hop bluetooth scatternets," IEEE GLOBECOM'03, 2003.. This is a distributed self-healing algorithm producing multi-hop Bluetooth scatternet trees, compatible with a limited communication range. This algorithm is considered the closest prior art for the present invention. However, to the best of the knowledge of the inventors, none of the approaches described above has been applied in practice for large networks. The evaluation typically focuses on simulations under ideal conditions, making impractical assumptions such as time synchronization, visibility of all nodes, or the neglect of the consideration of concurrency.

### 3. Description of the Invention

We require a decentralized method which can be iterated until all nodes have merged. Embodiments of the invention are defined in the appended claims. In accordance with a first aspect of the invention, a method for information exchange between Bluetooth nodes comprises:
- the Bluetooth nodes, without establishing a new Bluetooth connection in accordance with a Bluetooth standard, repeatedly requesting, receiving and accumulating state information from different neighbor nodes in their respective neighborhood of Bluetooth nodes, the state information provided in response to a request comprising
- a tree identifier indicative of a tree, to which the respective neighbor node currently belongs,
- a depth information element indicative of a depth of the respective neighbor node in the respective tree,
- a descendant information element indicative of a number of descendants managed by the respective neighbor node.

Preferably the state information provided, which the Bluetooth nodes accumulate, further comprises
- a connection information element indicative of a number of connections the respective neighbor node maintains,
- signal strength information indicative of a transmit power level and of a received signal strength related to the at the respective neighbor node

In accordance with the method of the first aspect of the invention, requesting the state information comprises sending an inquiry message, and the received state information is received in the form of an extended inquiry response message.

A second aspect of the invention relates to a method of operating Bluetooth nodes of one tree in preparing a tree merger process with a second tree, the first and second trees initially each having exactly one root node,
- the Bluetooth nodes performing the method of the first aspect of the invention or one of its embodiments;
- based on the accumulated state information, one of the Bluetooth nodes, which belongs to a first of the two trees and is hereinafter referred to as the Bluetooth node, sending a reconfigure request to a first neighbor node in the first tree, which in a master-slave relation with the Bluetooth node forms the master node, the reconfigure request requesting that the Bluetooth node becomes the root node for the first tree, and the reconfigure request including the tree identifier as maintained by the requesting Bluetooth node at the time of sending the reconfigure request;
- the first neighbor node comparing the tree identifier included in the reconfiguration request with the tree identifier as maintained by the first neighbor node at the time of receiving the reconfigure request;
- if the first neighbor node finds the compared tree identifiers to be identical, the first neighbor node forwarding the reconfigure request to an intermediate node, which in the master-slave relation with the first neighbor node forms the master; or, if the first neighbor node is the root node, the first neighbor node rejecting or accepting the reconfigure request based on a current value of a lock information element maintained by the root node, the lock information element indicating whether or not a reconfigure request from a different node is being processed already;
- if the first neighbor node finds the compared tree identifiers to be different, the first neighbor node responding to the Bluetooth node by rejecting the reconfigure request.

One embodiment of this method further comprises:
- the intermediate node, or, during further processing of the reconfigure request, any further intermediate node different from the root node, receiving the forwarded reconfigure request and comparing the included tree identifier of the Bluetooth node originating the reconfigure request with the tree identifier as maintained by the intermediate node, or by the corresponding further intermediate node, respectively, at the time of receiving the reconfigure request from the first neighbor node, or from the corresponding previous intermediate node;
- if the intermediate node, or, during further processing of the reconfigure request, any further intermediate node, finds the compared tree identifiers to be identical, the corresponding intermediate node forwarding the reconfigure request to the further intermediate node, which in the master-slave relation with the intermediate node forms the master; and continuing the described comparing and forwarding, until the reconfigure request is either rejected by any of the further intermediate nodes or reaches the root node of the first tree;
- if the intermediate node, or any of the further intermediate nodes, finds the compared respective tree identifiers to be different, the corresponding node responding to the first neighbor node or the previous intermediate node by rejecting the reconfigure request, and any previous intermediate nodes and the first neighbor node forwarding the rejection of the reconfigure request back until it reaches the Bluetooth node originating the reconfigure request.

In another embodiment, the Bluetooth node compares the values of the first tree identifier of the first tree and the second tree identifiers of the second tree in accordance with a predefined metric, and sends a reconfigure request only, if the second tree identifier of the second tree has a value that is lower than the first tree identifier of the first tree according to the metric. The metric can be defined such that some specific node has a lower tree identifier than all other nodes and therefore will become root of the completed tree.

A third aspect of the present invention is a method for operating a root node of a first tree of Bluetooth nodes in merging the first tree with a second tree of Bluetooth nodes, the method comprising:
- the root node of the first tree, hereinafter the Bluetooth node, sending a connection request to a second neighbor node of the second tree, wherein initially the Bluetooth node assumes the master role in the master-slave relation with the second neighbor node;
- the Bluetooth node and the second neighbor node performing an immediate role switch in their master-slave relation as part of the connection procedure;
- in case of a connection acceptance by the second neighbor node in response to the connection request, the Bluetooth node receiving a tree identifier and a depth information element of the second neighbor node;
- the Bluetooth node replacing a first tree identifier previously maintained by the Bluetooth node by a second tree identifier of the second tree and setting the depth information element maintained by the Bluetooth node to a new value that is incremented by one in comparison with the depth information element of the second neighbor node; and
- the Bluetooth node sending its new values of the tree identifier and of the depth information element to any third neighbor node that in the respective master-slave relation with the Bluetooth node forms the slave and this information being further passed on to all descendants, whereby the depth information is incremented at each step.

Preferably, the children nodes, upon receiving the tree identifier and depth information element from their master, also replace their previously maintained tree identifier, incrementing the depth, and sending this information to all their respective children.

Preferably, in case the second neighbor node refuses the connection request, the method comprises
- the Bluetooth node sending root information, the root information indicating that the Bluetooth node is now root of the first tree, and a new tree identifier to all its descendants.

An aspect, for which protection is not claimed here, is a method is a method for maintaining a tree of Bluetooth nodes, comprising
- providing a set of tree identifiers having different values for assignment to different subtrees of the tree;
- assigning a fixed target tree identifier to a selected target root node, the target tree identifier having, according to a predefined metric, the lowest of the values of the tree identifiers,
- only optionally: subsequently performing the method of any of the previously described embodiments.

That is, the method of this aspect can also be performed without the optional step.

In one embodiment, the set of tree identifiers is identical to a set of node identifiers assigned to the Bluetooth nodes, and wherein a tree is given the tree identifier that is identical to the node identifier of its respective root node.

Another aspect , for which protection is not claimed here, is a method for reducing a depth of a tree of Bluetooth nodes in accordance with a Bluetooth standard, the method comprising:
- performing a method according to one of the immediately foregoing aspect of the invention or one of its embodiments;
- wherein the state information sent by any respective neighbor node belonging to the tree of the target root node comprises a target tree information;
- wherein any of the Bluetooth nodes identifying that it has joined the target tree determines from the received descendant information elements whether any of the neighbor nodes also belonging to the target tree has a depth information element indicative of a depth at least two depth levels higher and has less than an allowed maximum number of descendant; and wherein,
- if a neighbor node is identified fulfilling these criteria, the respective Bluetooth node requests disconnection from its current master and requests a connection with the identified neighbor node.

A fourth aspect of the present invention is formed by a Bluetooth node, comprising a control unit, which is configured to control operation of Bluetooth node in performing a method according to any of the described embodiments. It is noted that the Bluetooth node is not to be understood as a central control node that performs all method steps alone. Rather, the Bluetooth node is configured to perform any of the method steps in accordance with a given situation in the process.

The methods of the present invention provide solutions to different aspects of constructing and maintaining a scatternet which satisfies at least some the listed requirements. An application example of the present invention is to network collectors in large solar energy farms. This application is characterized by an unlimited power supply, modest targets for the data traffic, and latency requirements. However, the method of the present invention is of general applicability to large scatternets, possibly modified to some extent from application case to application case.

The term "tree" includes the master-slave relation along each link. A node may be member of up to two piconets. An "intermediate" node participates in two piconets: it is slave in the piconet coordinated by the master above it in the hierarchy, and it is master of the piconet containing its own children.

### 4. Description of Embodiments with Reference to the Drawing

In the following, further embodiments will be described with respect to the enclosed Figures.
Fig. 1 shows two trees are shown before a node A initiates merging with B.
Fig. 2 shows an example for loop formation after a grab.
Fig. 3 illustrates the event-driven state machine for the active node A of Fig. 1.

### A. Basic tree-merging procedure

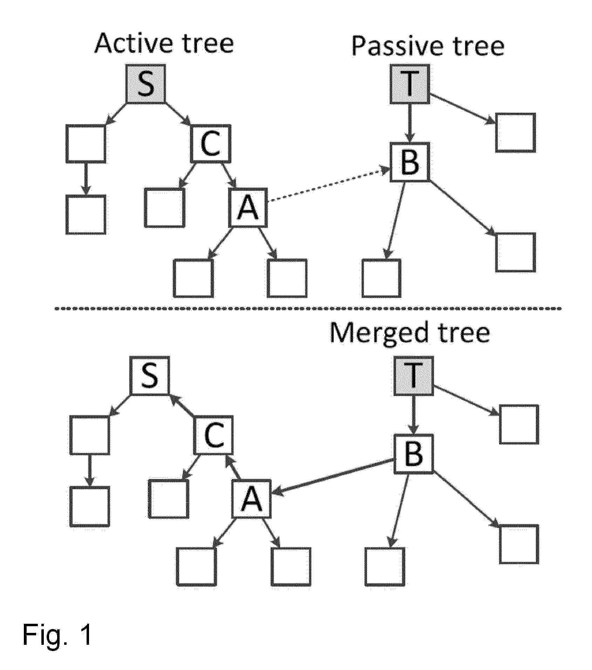

On each node, we characterize its role by the "tree identifier" (the Bluetooth device address of the root node) and its depth in the tree. In Figure 1 (Top) two trees are shown before node A initiates merging with B. After the active tree reconfigures to make A root, node A sends a connection request to B. As can be seen in the bottom part of Fig. 1, the merged tree where A is slave in the new connection and the node designated by T is root of the merged tree.

In addition, each node maintains a list of local connections and its master/slave role in each. This distinguishes between leaf, intermediate, and root nodes.

The method of the present embodiment makes use of the fact that, optionally, a 240-byte payload can be returned in an "extended inquiry response" (EIR). By this means nodes can inform others of their status in their tree before a connection is established. The method starts with node discovery, by means of the inquiry state entered at random intervals. The node accumulated state information from neighbor nodes by collecting extended inquiry results (EIRs). A node returns its current tree identifier, the depth in its tree, the number of connections, and the number of descendants. As an option, also the transmit power level and RSSI are available, giving an estimate of the path loss and inter-node distance. The active node then analyzes the responses and decides whether to merge trees (described next) or to reduce depth (described later). The exact preconditions for a merge are considered later; at the minimum, the two nodes must lie in different trees. The use of EIRs to collect information about the neighboring nodes is an important distinction to previous methods, since these previous methods require a connection to be built up before any such information can be exchanged.

An important distinction to the prior art is that the merging procedure of the present invention is highly asymmetrical. Considering Fig. 1, node A has decided to merge with node B, indicated by the dashed line. At this stage, B is completely passive at the application level (the EIR was sent automatically by the Bluetooth system) and has no knowledge of A's intentions.

The "active" left-hand tree must now reconfigure to make A the root. Node A sends a "reconfigure request" message upstream to its master C. This node passes the message on until the root S is reached. The root node (even when the root role moves from node to node) continually maintains a lock to ensure that only one merge operation is active at a time. If the reconfiguration is refused, a "reconfigure reject" message is returned. Node A then cancels the merge attempt and waits for the next inquiry phase.

Alternatively, if node S grants the reconfiguration, it sends a "reconfigure OK" message to C. Node C initiates a role switch with S. When the switch is complete, node S has changed to intermediate node. Node C is temporarily root, sends a reconfigure OK message downstream to A, waits for the role switch to be initiated by A, and is then again an intermediate node. Node A has now become root and initiates the connection to B. The connection will be set up with an immediate role switch: node B will becomes master, A will be slave.

At this point, node B for the first time notices the merge attempt as the connection request arrives. It rejects it if it cannot accept more children (say, some other new child arrived while tree A was reconfiguring). Otherwise, it accepts and sends its current tree id and depth over the new connection. Node A increments the depth, sets it own tree id/depth, sends a tree id message to all children, and unlocks. The merge procedure is now complete. However, the tree id message might still propagate some time down the subtree. Each node increments the depth, sets its own tree id/depth, and sends the message on to its children. Possible race conditions arising from the delay until the status information is consistent on all nodes of the tree are avoided by including the current value of the tree identifier in any reconfigure request and rejection of the request by all higher nodes which detect a mismatch of the tree identifier.

Noteworthy aspects of the merge procedure are as follows:
- As stated, the procedure is asymmetrical. The active tree containing A has locked, done a lengthy reconfigure operation, actively initiated the connection, and distributed the new tree identifier to its sub-tree. Node B has merely responded to the connection request and sent its tree id over the new link. No locks were set and no information was distributed. This is a major advantage for parallel tree-building in all parts of the system. Any number of other trees can merge with tree B at the same time. Also, we avoid the badly-scaling distribution of information in the ever larger target tree. In contrast, the prior art according to the SHAPER algorithm maintains the tree cardinality on all nodes, which would require additional effort to ensure consistency.
- There is only one single case to be handled (assuming the reconfigure step is simply skipped if node A already happens to be root). In contrast, SHAPER uses four different procedures depending on the roles nodes A and B play in their respective trees. This makes an implementation of the method of the present invention significantly easier.

In case node A finds its connection request refused by B, tree A has reconfigured in vain and the tree id/depth information is not consistent. Node A performs a "grab" to inform all descendants that is now root. It sends a tree id message to its children which then propagates as described. No attempt is made to determine the time when all descendants have received the message and set their tree id/depth correctly. This is discussed further below in the context of tree self-healing.

### B. Locking and loop avoidance

Additional measures are still needed to prevent loop formation. Locking ensures that maximally one merge attempt is done per tree, but parallel merges from tree A to tree B as well as from tree B to tree A can occur. A conceivable solution is to implement some analogous locking procedure on tree B. This would lead to a severely increased complexity with badly-scaling delays and intractable race condition issues. Worst of all, it sacrifices the property that many trees can merge into tree B simultaneously.

A tree, according to an embodiment of the present invention, only merges if its own tree id can be reduced. This leads to a robust procedure for large systems, allowing distributed merges in parallel. For example, it can happen that some other node in tree B has decided to merge with a third tree X while tree A was reconfiguring. This only means that the tree id finally presented to A is even lower than expected.

Depending on the timing, tree A might receive several tree id messages, each lowering the tree id further. But whatever sequence of merges is executed, a valid loop-free tree will always result.

Clearly, the final root node is preordained, namely the one with the lowest Bluetooth device address. This node will never actively merge, and all other nodes will join its tree eventually. This feature is used to choose a specific node as root of the final tree. This node (and no other) sets a flag which is part of the tree identifier (together with the aforementioned Bluetooth device address). The comparison between two tree identifiers is defined so that a flagged tree id always comes out lower. This node may in application cases be used as the gateway by which collected data is transferred to the Internet.

In the next subsection, the tree is optimized to reduce the depth relative to this specific node, a relatively simple problem compared to NP-difficult global optimization. Whatever node happens to be root, reconfigure requests walk upstream until they hit this node, which then returns the accept or reject decision. There is a consistency problem here. After every merge, new tree id/depth information is flooded downward, but a node can never be sure that its current tree id/depth information is up to date. The issue is important: a node which bases its decision to merge on stale data might set up a parallel connection to a remote tree and create a loop. Some kind of acknowledgment scheme to verify consistency over the whole tree is theoretically possible but not feasible in practice. The best solution is to include the current tree id of the originating node in each reconfigure request. The node which detects a discrepancy between its own tree id and that in the request immediately sends back a reject message to cancel the merge attempt. This device ensures that nodes only perform a merge when their tree id is correct.

### C. Tree optimization

Depending on the application, the tree could be constructed to balance the load on the nodes, to conserve energy, or to maximize the throughput etc. In the embodiment described below, it is of interest to minimize the number of hops between the root (gateway) node and any other node. A simple optimization strategy is used according to this embodiment as follows. When a node has joined the target tree (i.e., with flagged tree id) it begins to optimize to reduce its depth. The list of EIRs obtained during inquiry is inspected to find a peer node which is at least two steps higher in the same tree and can still accommodate another child. In that case, the node disconnects from its current master and builds a new connection to the peer node, thereby reducing its depth within the tree. Simulations and experimental verification have shown that this simple technique effectively rebuilds the tree to a suitable topology; at that point, no node can further reduce its depth by local optimization.

In one embodiment, the optimization is performed for the depth in the tree as well as for the link quality in parallel by defining a suitable quality measure which combined both parameters. This can be a simple linear combination of the depth and the path loss whereby the coefficients define the priority of reducing the depth and the path loss, respectively.

The peer node might reject the incoming connection request, e.g., because it has reached the maximal number of children. In that case, the already-merged tree has been split and must be re-merged. The node attempting to reduce its depth is now root of the split-off tree and performs a grab as described above. After that, the procedure is handled by the self-healing behavior, described next.

### D. Tree self-healing

When communication over a Bluetooth link breaks down, both nodes are informed of the broken link. The node which has lost its master has become root of the split-off subtree. It performs a grab to inform its descendants of the new tree id. From that moment, all nodes in the subtree again initiate tree merging when a suitable peer is found in inquiry. This is the essence of the self-healing behavior: all nodes periodically probe their environment by means of the inquiry state and the collection of EIRs. For a stable system, each inquiry phase leads to the result that no action must be taken. As soon as the EIRs show the necessity to merge or reduce depth, these procedures are triggered. Although tree-healing is in principle built into the method, a specific problem can arise. By construction, whenever the tree splits and a grab is done, the tree id in the split-off subtree increases. Nodes have merged in order to reduce their tree id as low as possible, and this is reversed when a subtree splits off. Therefore, the automatic robustness which was present during tree building is broken. Consequently loops can arise in some cases and must be handled.

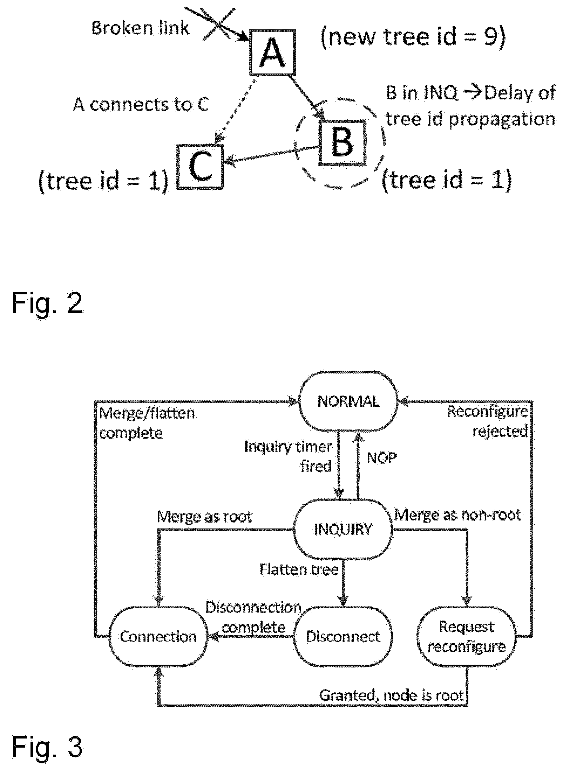

Fig. 2 shows an example for loop formation after grab. In the situation illustrated in Fig. 2, node A has lost its master by a broken link and has grabbed the split-off tree by sending a tree id message to its child B. Because B is in inquiry, the message is delayed for some seconds. During this period, A goes into inquiry itself and receives stale information from C, since this node still believes itself to be in the old tree with lower tree id. Node A consequently merges with node C, thereby creating a loop. As an effective fix, node A detects the loop when the tree id message it has sent to B loops back. The node then disconnects all links to its neighbors and proceeds with tree merging after a pause of a few seconds.

### E. Example Implementations

Figure 3 illustrates the event-driven state machine for the active node A of Fig. 1. As mentioned, peer node B is mainly passive, responding to the connection request and returning its tree id/depth over the new connection. In NORMAL, the node handles connection requests and data traffic, sends inquiry responses, and takes part in reconfiguration operations by other nodes in the tree. After a random period, the node goes into INQUIRY and builds up a list of neighbors. This list is analyzed and can initiate one of three procedures:
- If A wants to merge trees and is root, it does a connection request and goes to CONNECTION. When the connection is established and the new tree id was received, A distributes the tree id to its descendants and goes to NORMAL.
- If A wants to merge trees and is non-root, it sends a reconfigure request upstream and goes to REQUEST CONFIGURE. If the reconfiguration is granted, A does a connection request and goes to CONNECT as in the previous case. Otherwise the merge attempt is canceled.
- If A lies in the target tree and can reduce its depth by becoming child of the peer node, it disconnects from its master in DISCONNECT, then does a connection request and goes to CONNECT as above.

If none of these procedures is appropriate, A returns from INQUIRY to NORMAL: the tree is stable. The node remains in the NORMAL state until a random time later when the inquiry timer fires and the next inquiry phase is entered.

The method was implemented over the Bluetooth HCl (host controller) interface. The implementation was used together with a Bluetooth simulator written in C which allows efficient simulation of hundreds of nodes, as well as with an adaptation layer to the BlueZ Bluetooth stack under Linux. Thus, a single implementation could be used to develop the code, study the performance via simulation, and perform real-life tests. Simulation showed that the trees were consistently successfully built and optimized for hundreds of tests with up to 400 nodes. A stable tree typically was reached after a one to two minutes, depending on system size and parameters. Real-life tests showed successful tree constructing for a test system of 20 nodes in the laboratory and 30 nodes in an industrial facility.

In contrast to previous related efforts, this work was driven by the requirements of realistic systems. At this time, large-scale simulations as well as real-life tests have verified the performance of the approach.

## Claims

1. A method for information exchange between Bluetooth nodes (A, B), the method including
- the Bluetooth nodes (A, B), without establishing a new Bluetooth connection in accordance with a Bluetooth standard, repeatedly requesting, receiving and accumulating state information from different neighbor nodes (C, T) in their respective neighborhood of Bluetooth nodes by means of inquiry and extended inquiry response messages, wherein requesting the state information comprises sending an inquiry message and the state information is received in the form of an extended inquiry response message, and by
- the state information provided in response to a request comprising
- a tree identifier indicative of a tree, to which the respective neighbor node currently belongs,
- a descendant information element indicative of a number of descendants managed by the respective neighbor node (C, T),
**characterized in that**
the state information provided in response to the request additionally comprises a depth information element indicative of a depth of the respective neighbor node (C, T) in the respective tree.

2. The method of claim 1, wherein the received state information, which the Bluetooth nodes (A, B) accumulate, further comprises
- a connection information element indicative of a number of connections the respective neighbor node (C, T) maintains,
- signal strength information indicative of a transmit power level and of a received signal strength related to the at the respective neighbor node (C, T).

3. A method of operating Bluetooth nodes (A, C) of one tree in preparing a tree merger process with a second tree, the first and second trees initially each having exactly one root node (S, T),
- the Bluetooth nodes (A, B) performing the method of claim 1 or 2;
- based on the accumulated state information, one of the Bluetooth nodes (A), which belongs to a first of the two trees and is hereinafter referred to as the Bluetooth node, sending a reconfigure request to a first neighbor node (C) in the first tree, which in a master-slave relation with the Bluetooth node (A) forms the master node, the reconfigure request requesting that the Bluetooth node (A) becomes the root node for the first tree, and the reconfigure request including the tree identifier as maintained by the requesting Bluetooth node (A) at the time of sending the reconfigure request;
- the first neighbor node (C) comparing the tree identifier included in the reconfiguration request with the tree identifier as maintained by the first neighbor node (C) at the time of receiving the reconfigure request;
- if the first neighbor node (C) finds the compared tree identifiers to be identical, the first neighbor node (C) forwarding the reconfigure request to an intermediate node, which in the master-slave relation with the first neighbor node (C) forms the master; or, if the first neighbor node (C) is the root node, the first neighbor node rejecting or accepting the reconfigure request based on a current value of a lock information element maintained by the root node, the lock information element indicating whether or not a reconfigure request from a different node is being processed already;
- if the first neighbor node (C) finds the compared tree identifiers to be different, the first neighbor node responding to the Bluetooth node (A) by rejecting the reconfigure request.

4. The method of claim 3, further comprising
- the intermediate node, or, during further processing of the reconfigure request, any further intermediate node different from the root node (S), receiving the forwarded reconfigure request and comparing the included tree identifier of the Bluetooth node (A) originating the reconfigure request with the tree identifier as maintained by the intermediate node, or by the corresponding further intermediate node, respectively, at the time of receiving the reconfigure request from the first neighbor node (C), or from the corresponding previous intermediate node;
- if the intermediate node, or, during further processing of the reconfigure request, any further intermediate node, finds the compared tree identifiers to be identical, the corresponding intermediate node forwarding the reconfigure request to the further intermediate node, which in the master-slave relation with the intermediate node forms the master; and continuing the described comparing and forwarding, until the reconfigure request is either rejected by any of the further intermediate nodes or reaches the root node (S) of the first tree;
- if the intermediate node, or any of the further intermediate nodes, finds the compared respective tree identifiers to be different, the corresponding node responding to the first neighbor node (C) or the previous intermediate node by rejecting the reconfigure request, and any previous intermediate nodes and the first neighbor node (C) forwarding the rejection of the reconfigure request back until it reaches the Bluetooth node (A) originating the reconfigure request.

5. The method of claim 3 or 4, wherein the Bluetooth node (A) compares the values of the first tree identifier of the first tree and the second tree identifies of the second tree in accordance with a predefined metric, and sends a reconfigure request only, if the second tree identifier of the second tree has a value that is lower than the first tree identifier of the first tree according to the metric.

6. A method for operating a root node (S) of a first tree of Bluetooth nodes in merging the first tree with a second tree of Bluetooth nodes, the method comprising:
- the root node (S) of the first tree, hereinafter the Bluetooth node, sending a connection request to a second neighbor node of the second tree, wherein initially the Bluetooth node (S) assumes the master role in the master-slave relation with the second neighbor node;
- the Bluetooth node (S) and the second neighbor node performing an immediate role switch in their master-slave relation during the connection process;
- in case of a connection acceptance by the second neighbor node in response to the connection request, the Bluetooth node (S) receiving a tree identifier and a depth information element of the second neighbor node;
- the Bluetooth node (S) replacing a first tree identifier previously maintained by the Bluetooth node by a second tree identifier of the second tree and setting the depth information element maintained by the Bluetooth node to a new value that is incremented by one in comparison with the depth information element of the second neighbor node; and
- the Bluetooth node (S) sending its new values of the tree identifier and of the depth information element to any third neighbor node that in the respective master-slave relation with the Bluetooth node (S) forms the slave; and
- the children nodes, upon receiving the tree identifier and depth information element form their master (S), also replacing their previously maintained tree identifier, incrementing the depth, and sending this information to all their respective children.

7. The method of claim 6, wherein, in case the second neighbor node refuses the connection request, the method comprises
- the Bluetooth node (S) sending root information, the root information indicating that the Bluetooth node (S) is now root of the first tree, and a new tree identifier to all its descendants.

8. A Bluetooth node, comprising a control unit, which is configured to control operation of Bluetooth node to perform a method according to one of the claims 1 to 7.

9. A network of Bluetooth nodes, comprising a plurality of Bluetooth nodes in accordance with claim 8.

## Patentansprüche

1. Verfahren zum Informationsaustausch zwischen Bluetooth-Knoten (A, B), das Verfahren umfassend, dass
- die Bluetooth-Knoten (A, B), ohne eine neue Bluetooth-Verbindung entsprechend einem Bluetooth-Standard herzustellen, wiederholt Zustandsinformation von verschiedenen Nachbarknoten (C, T) in ihrer jeweiligen Nachbarschaft aus Bluetooth-Knotenanfordern, empfangen und sammeln, mit Hilfe von Anfrage- und erweiterten Anfrage-Erwiderungs-Nachrichten, wobei das Anfordern von Zustandsinformation ein Senden einer Anfrage-Nachricht umfasst und die Zustandsinformation in Form einer erweiterten Anfrage-Erwiderungs-Nachricht empfangen wird, und dass
- die Zustandsinformation, die in Erwiderung einer Anforderung bereitgestellt wird, aufweist:
- eine Baum-Kennung, die einen Baum anzeigt, zu dem der entsprechende Nachbarknoten aktuell gehört,
- ein Nachkommen-Informations-Element, das eine Anzahl von durch den entsprechenden Nachbarknoten (C, T) geführte Nachkommen anzeigt,
**dadurch gekennzeichnet, dass**
die Zustandsinformation, die in Erwiderung auf das Anfordern bereitgestellt wird, zusätzlich ein Tiefen-Informations-Element aufweist, das eine Tiefe des entsprechenden Nachbarknotens (C, T) in dem entsprechenden Baum anzeigt.

2. Verfahren gemäß Anspruch 1, bei dem die empfangene Zustandsinformation, die durch Bluetooth-Knoten (A, B) gesammelt wird, weiterhin aufweist
- ein Verbindungs-Informations-Element, das eine Anzahl von durch den entsprechenden Nachbarknoten (C, T) gehaltene Verbindungen anzeigt,
- Signalstärke-Information, die ein Sendeleistungs-Niveau und eine empfangene Signalstärke in Bezug auf den entsprechenden Nachbarknoten (C, T) anzeigt.

3. Verfahren zum Betreiben von Bluetooth-Knoten (A, C) eines gegebenen Baumes in Vorbereitung eines Baum-Zusammenführungs-Prozesses mit einem zweiten Baum, wobei der erste und zweite Baum anfänglich jeweils genau einen Wurzelknoten (S, T) haben,
- die Bluetooth-Knoten (A, B) das Verfahren gemäß Anspruch 1 oder 2 ausführen;
- einer der Bluetooth-Knoten (A), der zu einem ersten der zwei Bäume gehört und im Folgenden als der Bluetooth-Knoten bezeichnet wird, basierend auf der gesammelten Zustandsinformation eine Rekonfigurations-Anforderung an einen ersten Nachbarknoten (C) in dem ersten Baum sendet, der in einer Master-Slave Beziehung zu dem Bluetooth-Knoten (A) den Master-Knoten bildet, wobei die Rekonfigurations-Anforderung anfordert, dass der Bluetooth-Knoten (A) der Wurzelknoten des ersten Baums wird, und die Rekonfigurations-Anforderung diejenige Baum-Kennung enthält, die von dem anfordernden Bluetooth-Knoten (A) zur Zeit des Sendens der Rekonfigurations-Anforderung gehalten wird;
- der erste Nachbarknoten (C) die in der Rekonfigurations-Anforderung enthaltene Baum-Kennung mit derjenigen Baum-Kennung vergleicht, die von dem ersten Nachbarknoten (C) zur Zeit des Empfangens der Rekonfigurations-Anforderung gehalten wird;
- wenn der erste Nachbarknoten (C) die verglichenen Baum-Kennungen als identisch befindet, der erste Nachbarknoten (C) die Rekonfigurations-Anforderung an einen Zwischenknoten weiterleitet, welcher in der Master-Slave Beziehung mit dem ersten Nachbarknoten (C) den Master bildet; oder, wenn der erste Nachbarknoten (C) der Wurzelknoten ist, der erste Nachbarknoten die Rekonfigurations-Anforderung zurückweist oder akzeptiert, basierend auf einem aktuellen Wert eines Sperr-Informationslements, welches von dem Wurzelknoten gehalten wird, wobei das Sperr-Informationselement darauf hindeutet, ob bereits eine Rekonfigurations-Anforderung von einem anderen Knoten in Verarbeitung befindlich ist oder nicht;
- wenn der erste Nachbarknoten (C) die verglichenen Baum-Kennungen aös verschieden befindet, der erste Nachbarknoten dem Bluetooth-Knoten (A) durch Zurückweisen der Rekonfigurations-Anforderung antwortet.

4. Verfahren gemäß Anspruch 3, weiterhin aufweisend, dass
- der Zwischenknoten oder, während weiterer Verarbeitung der Rekonfigurations-Anforderung, jeglicher weitere von dem Wurzelknoten (S) verschiedene Zwischenknoten die weitergeleitete Rekonfigurations-Anforderung empfängt und die darin enthaltene Baum-Kennung des Bluetooth-Knotens (A), von dem die Rekonfigurations-Anforderung stammt, mit derjenigen Baum-Kennung vergleicht, die von dem Zwischenknoten, oder von dem jeweiligen weiteren Zwischenknoten, zur Zeit des Empfangens der Rekonfigurations-Anforderung von dem ersten Nachbarknoten (C), oder von dem entsprechenden vorherigen Zwischenknoten, gehalten wird;
- wenn der Zwischenknoten oder, während weiterer Verarbeitung der Rekonfigurations-Anforderung, jeglicher weitere Zwischenknoten die verglichene Baum-Kennung für identisch befindet, der entsprechende Zwischenknoten die Rekonfigurations-Anforderung an den weiteren Zwischenknoten weiterleitet, der in der Master-Slave Beziehung mit dem Zwischenknoten den Master bildet; und das beschriebene Vergleichen und Weiterleiten weiterführt, bis die Rekonfigurations-Anforderung entweder durch einen beliebigen der weiteren Zwischenknoten zurückgewiesen wird oder den Wurzelknoten (S) des ersten Baums erreicht;
- wenn der Zwischenknoten oder einer der weiteren Zwischenknoten die jeweils verglichenen Baum-Kennungen für verschiedene befindet, der entsprechende Knoten auf den ersten Nachbarknoten (C) oder auf den vorherigen Zwischenknoten durch ein Zurückweisen der Rekonfigurations-Anforderung reagiert, und jeglicher vorherige Zwischenknoten und der erste Nachbarknoten (C) die Zurückweisung der Rekonfigurations-Anforderung zurückleiten, bis sie den Bluetooth-Knoten (A) erreicht, von dem die Rekonfigurations-Anforderung stammt.

5. Verfahren gemäß Anspruch 3 oder 4, bei dem der Bluetooth-Knoten (A) die Werte der ersten Baum-Kennung des ersten Baums und der zweiten Baum-Kennung des zweiten Baums entsprechend einer vorbestimmten Metrik vergleicht, und eine Rekonfigurations-Anforderung nur dann sendet, wenn die zweite Baum-Kennung des zweiten Baums einen Wert hat, der entsprechend der Metrik kleiner ist als die erste Baum-Kennung des ersten Baums.

6. Verfahren zum Betreiben eines Wurzelknotens (S) eines ersten Baums von Bluetooth-Knoten beim Vereinigen des ersten Baums mit einem zweiten Baum von Bluetooth-Knoten, das Verfahren aufweisend, dass:
- der Wurzelknoten (S) des ersten Baums, im Folgenden der Bluetooth-Knoten, eine Verbindungs-Anforderung an einen zweiten Nachbarknoten des zweiten Baums sendet, wobei anfänglich der Bluetooth-Knoten (S) die Master-Rolle in der Master-Slave Beziehung mit dem zweiten Nachbarknoten einnimmt;
- der Bluetooth-Knoten (S) und der zweite Nachbarknoten einen unmittelbaren Rollentausch in ihrer Master-Slave Beziehung während des Verbindungs-Prozesses ausführen;
- im Falle eines Verbindungs-Annahme durch den zweiten Nachbarknoten in Reaktion auf die Verbindungs-Anforderung, der Bluetooth-Knoten (S) eine Baum-Kennung und ein Tiefen-Informationselement des zweiten Nachbarknotens empfängt;
- der Bluetooth-Knoten (S) eine erste Baum-Kennung, die vorher von dem Bluetooth-Knoten gehalten wurde, durch eine zweite Baum-Kennung des zweiten Baums ersetzt und das Tiefen-Informationselement, das von dem Bluetooth-Knoten gehalten wurde, auf einen neuen Wert setzt, der im Vergleich zum Tiefen-Informationselement des zweiten Nachbarknotens inkrementiert ist; und
- der Bluetooth-Knoten (S) seine neuen Werte der Baum-Kennung und des Tiefen-Informationselements an jeglichen dritten Nachbarknoten sendet, der in der jeweiligen Master-Slave-Beziehung mit dem Bluetooth-Knoten (S) den Slave bildet; und
- die Kinder-Knoten, nach Empfang der Baum-Kennung und des Tiefen-Informationselements von ihrem Master (S), ebenfalls ihre vorher gehalten Baum-Kennung ersetzen, die Tiefe inkrementieren, und diese Information an alle ihre jeweiligen Kinder senden.

7. Verfahren gemäß Anspruch 6, bei dem, in dem Fall, dass der zweite Nachbarknoten die Verbindungs-Anforderung verweigert, das Verfahren aufweist, dass
- der Bluetooth-Knoten (S) Wurzel-Informationen sendet, wobei die Wurzel-Informationen anzeigt, dass der Bluetooth-Knoten (S) nun Wurzel des ersten Baums ist, und eine neue Baum-Kennung an alle seine Nachkommen.

8. Bluetooth-Knoten, eine Steuereinheit aufweisend, die ausgebildet ist, den Betrieb des Bluetooth-Knoten zu steuern, um ein Verfahren gemäß einem der Ansprüche 1 bis 7 auszuführen.

9. Netzwerk von Bluetooth-Knoten, eine Mehrzahl von Bluetooth-Knoten gemäß Anspruch 8 aufweisend.

## Revendications

1. Procédé d'échange d'informations entre des noeuds Bluetooth (A, B), le procédé incluant les étapes ci-dessous dans lesquelles :
- les noeuds Bluetooth (A, B), sans établir de nouvelle connexion Bluetooth conformément à une norme Bluetooth, demandent, reçoivent et accumulent, de manière répétée, des informations d'état en provenance de différents noeuds voisins (C, T) dans leur voisinage respectif de noeuds Bluetooth, au moyen de messages de réponse d'interrogation étendue et de messages d'interrogation, dans lequel l'étape de demande d'informations d'état consiste à envoyer un message d'interrogation, et dans lequel les informations d'état sont reçues sous la forme d'un message de réponse d'interrogation étendue ; et dans lequel
- les informations d'état fournies en réponse à une demande comportent :
- un identifiant d'arbre indicatif d'un arbre auquel appartient actuellement le noeud voisin respectif ;
- un élément d'information de descendants indicatif d'un nombre de descendants gérés par le noeud voisin respectif (C, T) ;
**caractérisé en ce que** :
les informations d'état fournies en réponse à la demande comportent en outre un élément d'information de profondeur indicatif d'une profondeur du noeud voisin respectif (C, T) dans l'arbre respectif

2. Procédé selon la revendication 1, dans lequel les informations d'état reçues, que les noeuds Bluetooth (A, B) accumulent, comportent en outre :
- un élément d'information de connexion indicatif d'un nombre de connexions que le noeud voisin respectif (C, T) maintient ;
- des informations d'intensité de signal indicatives d'un niveau de puissance de transmission et d'une intensité de signal reçue, connexes au noeud voisin respectif (C, T).

3. Procédé d'exploitation de noeuds Bluetooth (A, C) d'un arbre dans le cadre de la préparation d'un processus de fusion d'arbres avec un second arbre, les premier et second arbres présentant chacun initialement exactement un noeud racine (S, T) ;
- les noeuds Bluetooth (A, B) mettant en oeuvre le procédé selon la revendication 1 ou 2 ;
- sur la base des informations d'état accumulées, l'un des noeuds Bluetooth (A), qui appartient à un premier des deux arbres et est ci-après appelé le « noeud Bluetooth », envoyant une demande de reconfiguration à un premier noeud voisin (C) dans le premier arbre, lequel, dans une relation maître-esclave avec le noeud Bluetooth (A) forme le noeud maître, la demande de reconfiguration demandant que le noeud Bluetooth (A) devienne le noeud racine pour le premier arbre, et la demande de reconfiguration incluant l'identifiant d'arbre tel que maintenu par le noeud Bluetooth demandeur (A) au moment de l'envoi de la demande de reconfiguration ;
- le premier noeud voisin (C) comparant l'identifiant d'arbre inclus dans la demande de reconfiguration à l'identifiant d'arbre tel que maintenu par le premier noeud voisin (C) au moment de la réception de la demande de reconfiguration ; dans lequel
- si le premier noeud voisin (C) découvre que les identifiants d'arbres comparés sont identiques, le premier noeud voisin (C) transmet la demande de reconfiguration à un noeud intermédiaire, lequel, dans la relation maître-esclave avec le premier noeud voisin (C), forme le maître ; ou, si le premier noeud voisin (C) est le noeud racine, le premier noeud voisin refuse ou accepte la demande de reconfiguration sur la base d'une valeur en cours d'un élément d'information de verrouillage maintenu par le noeud racine, l'élément d'information de verrouillage indiquant si une demande de reconfiguration en provenance d'un noeud distinct est déjà en cours de traitement ou non ;
- si le premier noeud voisin (C) découvre que les identifiants d'arbres comparés sont différents, le premier noeud voisin répond au noeud Bluetooth (A), en refusant la demande de reconfiguration.

4. Procédé selon la revendication 3, comprenant en outre les étapes ci-dessous dans lesquelles :
- le noeud intermédiaire, ou, au cours d'un traitement ultérieur de la demande de reconfiguration, tout noeud intermédiaire supplémentaire distinct du noeud racine (S), reçoit la demande de reconfiguration transmise et compare l'identifiant d'arbre inclus du noeud Bluetooth (A) provenant de la demande de reconfiguration à l'identifiant d'arbre tel que maintenu par le noeud intermédiaire, ou par le noeud intermédiaire supplémentaire correspondant, respectivement, au moment de la réception de la demande de reconfiguration à partir du premier noeud voisin (C), ou à partir du noeud intermédiaire précédent correspondant ;
- si le noeud intermédiaire, ou, au cours d'un traitement ultérieur de la demande de reconfiguration, tout noeud intermédiaire supplémentaire, découvre que les identifiants d'arbres comparés sont identiques, le noeud intermédiaire correspondant transmet la demande de reconfiguration au noeud intermédiaire supplémentaire, lequel, dans la relation maître-esclave avec le noeud intermédiaire, forme le maître ; et il poursuit les étapes de comparaison et de transmission décrites, jusqu'à ce que la demande de reconfiguration est soit refusée par l'un quelconque des noeuds intermédiaires supplémentaires, ou qu'elle atteigne le noeud racine (S) du premier arbre ;
- si le noeud intermédiaire, ou l'un des noeuds intermédiaires supplémentaires, découvre que les identifiants d'arbres respectifs comparés sont différents, le noeud correspondant répond au premier noeud voisin (C) ou au noeud intermédiaire précédent en refusant la demande de reconfiguration, et des quelconques noeuds intermédiaires précédents et le premier noeud voisin (C) retransmettent le refus de la demande de reconfiguration jusqu'à ce qu'elle atteigne le noeud Bluetooth (A) à l'origine de la demande de reconfiguration.

5. Procédé selon la revendication 3 ou 4, dans lequel le noeud Bluetooth (A) compare les valeurs du premier identifiant d'arbre du premier arbre et du second identifiant d'arbre du second arbre conformément à une métrique prédéfinie, et envoie une demande de reconfiguration uniquement, si le second identifiant d'arbre du second arbre présente une valeur qui est inférieure à celle du premier identifiant d'arbre du premier arbre selon la métrique.

6. Procédé d'exploitation d'un noeud racine (S) d'un premier arbre de noeuds Bluetooth dans le cadre de la fusion du premier arbre avec un second arbre de noeuds Bluetooth, le procédé comprenant les étapes ci-dessous dans lesquelles :
- le noeud racine (S) du premier arbre, ci-après appelé le « noeud Bluetooth », envoie une demande de connexion à un second noeud voisin du second arbre, dans lequel initialement le noeud Bluetooth (S) prend le rôle de maître dans la relation maître-esclave avec le second noeud voisin ;
- le noeud Bluetooth (S) et le second noeud voisin mettent en oeuvre une commutation de rôle immédiate dans leur relation maître-esclave au cours du processus de connexion ;
- dans le cas d'une acceptation de connexion par le second noeud voisin en réponse à la demande de connexion, le noeud Bluetooth (S) reçoit un identifiant d'arbre et un élément d'information de profondeur du second noeud voisin ;
- le noeud Bluetooth (S) remplace un premier identifiant d'arbre précédemment maintenu par le noeud Bluetooth par un second identifiant d'arbre du second arbre, et définit l'élément d'information de profondeur maintenu par le noeud Bluetooth sur une nouvelle valeur qui est incrémentée de un par rapport à l'élément d'information de profondeur du second noeud voisin ; et
- le noeud Bluetooth (S) envoie ses nouvelles valeurs de l'identifiant d'arbre et de l'élément d'information de profondeur à un quelconque troisième noeud voisin, qui, dans la relation maître-esclave respective avec le noeud Bluetooth (S), forme l'esclave ; et
- les noeuds enfant, suite à la réception de l'identifiant d'arbre et de l'élément d'information de profondeur forment leur maître (S), remplacent également leur identifiant d'arbre maintenu précédemment, incrémentent la profondeur, et envoient ces informations à tous leurs enfants respectifs.

7. Procédé selon la revendication 6, dans lequel, dans le cas où le second noeud voisin refuse la demande de connexion, le procédé comprend les étapes ci-dessous dans lesquelles :
- le noeud Bluetooth (s) envoie des informations racine, les informations racine indiquant que le noeud Bluetooth (S) est à présent le noeud racine du premier arbre, et envoie un nouvel identifiant d'arbre à tous ses descendants.

8. Noeud Bluetooth, comprenant une unité de commande, qui est configurée de manière à commander le fonctionnement du noeud Bluetooth en vue de mettre en oeuvre un procédé selon l'une quelconque des revendications 1 à 7.

9. Réseau de noeuds Bluetooth, comprenant une pluralité de noeuds Bluetooth selon la revendication 8.
